Europäisches Patentamt

European Patent Office

Office européen des brevets

(11) Numéro de publication: **0 230 841**
**A1**

(12) # DEMANDE DE BREVET EUROPEEN

(21) Numéro de dépôt: 86420285.8

(22) Date de dépôt: 24.11.86

(51) Int. Cl.⁴: **A22C 17/00**

(30) Priorité: 27.11.85 FR 8517975
31.10.86 FR 8615643

(43) Date de publication de la demande:
05.08.87 Bulletin 87/32

(84) Etats contractants désignés:
**AT BE CH DE ES GB GR IT LI LU NL SE**

(71) Demandeur: **Emsens Antoine SARL**
**Site Industriel C3F**
**F-42490 Fraisses(FR)**

(72) Inventeur: **Emsens,Michel**
**La Rivoire**
**F-42490 Fraisses(FR)**

(74) Mandataire: **Dupuis, François**
**Cabinet Charras 3 Place de l'Hôtel-de-Ville**
**BP 203**
**F-42005 St. Etienne Cédex 1(FR)**

(54) **Machine pour la fabrication automatique des brochettes de viande et/ou de légumes enfilés sur des broches.**

(57) L'objet de l'invention se rattache notamment au secteur technique de la mise en forme ou traitement des produits alimentaires.

La machine comprend en combinaison, convenablement montée sur un bâti (B), une plaque-support coulissante (4) disposée axialement à la base du bac (1) et montée avec capacité de déplacement vertical guidé en étant accouplée à un organe de commande, ladite plaque (4) présentant un tiroir amovible agencé pour permettre le positionnement vertical amovible d'une pluralité de broches (3) en vue de leur enfoncement dans les différentes couches lors d'une action sur l'organe de commande précité ; un ou des dispositifs de coupe (10) étant accouplés à un moyen de commande en translation horizontale aller et retour en étant monté à coulissement guidé par rapport au bâti (B) et perpendiculairement à l'une au moins des faces du bac (1) en vue d'effectuer le tranchage des couches de viandes et/ou de légumes ; les dispositifs d'embrochement et de coupe étant commandés en synchronisme à partir d'un même point de commande.

L'invention est notamment utilisée pour la réalisation entièrement automatique de brochettes de viandes et/ou de légumes.

FIG.1

## Machine pour la fabrication automatique des brochettes de viande et/ou de légumes enfilés sur des broches.

L'objet de l'invention se rattache au secteur de la mise en forme ou traitement des produits alimentaires.

On connaît des machines pour effectuer mécaniquement la fabrication des brochettes en étant équipées de moyens d'embrochement et de coupe automatique ou semi-automatique. A ce jour, de telles machines utilisent des broches en bois qui sont fragiles et facilement cassables notamment lorsqu'elles rencontrent des couches de viande dures. Il apparaît donc des problèmes au niveau de l'embrochement. Ce dernier doit être effectué manuellement avec certaines précautions ce qui est long, freinant ainsi d'une manière importante la cadence de production.

Dans le cas d'un embrochement automatique, il est nécessaire de prévoir des moyens particuliers supportant les broches en évitant, dans la mesure du possible, de les casser au moment et au fur et à mesure de leur enfoncement.

Le problème étant ainsi posé, l'invention s'est fixée pour but de réaliser une machine conformée et adaptée pour la fabrication automatique de brochettes, embrochement et coupe, d'une manière sure efficace et simplifiée, l'alimentation et le déchargement de la machine en bac de viande et/ou de légumes pouvant s'effectuer d'une manière automatique.

Les broches utilisées peuvent être en bois du type de celles parfaitement connues pour la préparation de brochettes ou bien du type de celle décrites dans la demande de brevet français n.85.14893.

Dans ce but, l'invention est remarquable en ce que le dispositif d'embrochement est disposé axialement au-dessus du bac en étant conformé et commandé verticalement en hauteur, pour, d'une part, autoriser l'embrochement automatique et simultané de l'ensemble des broches métalliques qui sont positionnées verticalement dans des agencements que présentent la face supérieure du bac de sorte que lesdites broches sont en appui sur les couches de viandes et/ou de légumes et, d'autre part, assurer la mise en pression de ladite face supérieure du bac après enfoncement des broches et pendant l'opération de coupe.

Suivant une autre caractéristique, sous la base du bac est montée coaxialement à libre coulissement, une plaque support qui reçoit directement ou d'une manière rapportée, une pluralité de tiges de préperçage disposées en regard et en correspondance avec des trous débouchants formés dans le fond dudit bac, en alignement et en correspondance avec les agencements du couvercle recevant les broches, le dispositif d'embrochement et ladite plaque support des tiges de préperçage étant asservis à des moyens de commande conformés et agencés pour, dans un premier temps, autoriser l'enfoncement des tiges de préperçage dans les différentes couches de viande, puis, dans une étape ultérieure, autoriser le retrait desdites tiges et simultanément l'enfoncement des broches au fur et à mesure du retrait des tiges de préperçage.

L'invention est exposée ci-après plus en détail à l'aide des dessins qui représentent seulement un mode d'exécution:

-la figure 1 est une vue en coupe longitudinale de la machine,

-la figure 2 est une vue en plan et en coupe considérée selon la ligne 2.2 de la figure 1,

-la figure 3 est une vue en coupe transversale considérée selon la ligne 3.3. de la figure 1,

-les figures 4 à 11 sont des vues à caractère purement schématique illustrant les principales phases de fonctionnement:

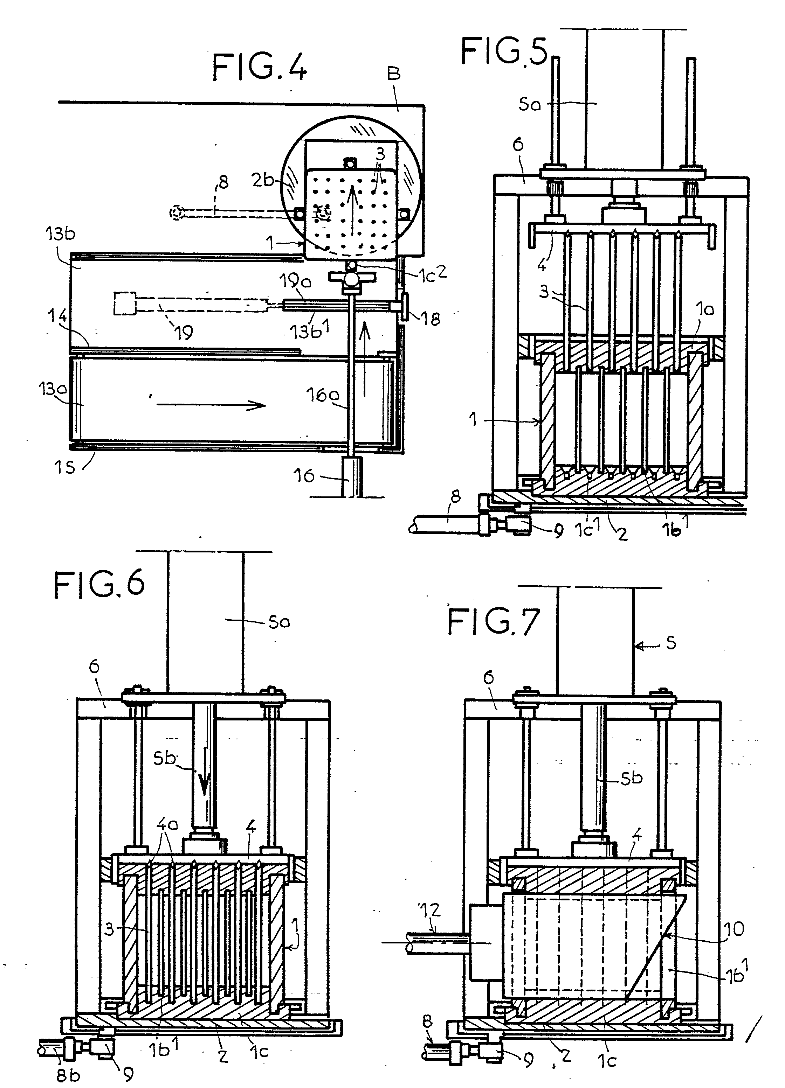

- la figure 4 est une vue en plan montrant l'introduction du bac,

- la figure 5 est une vue de face correspondant à la figure 4,

-la figure 6 est une vue de face montrant l'embro chement,

-la figure 7 est une vue semblabe à la figure 6 montrant la première coupe,

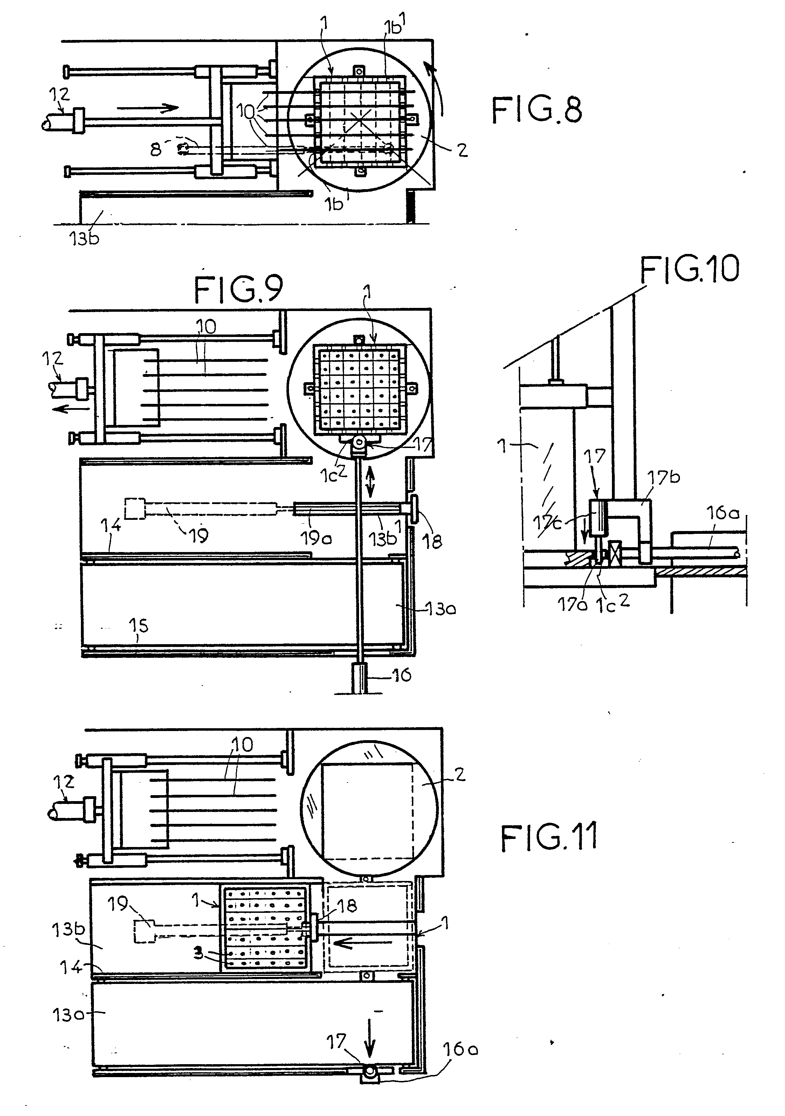

-la figure 8 est une vue en plan montrant la deuxième coupe à 90°,

-la figure 9 est une vue en plan montrant l'accouplement du bac en vue de son évacuation,

-la figure 10 est une vue de profil correspondant à la figure 9,

-la figure 11 est une vue en plan illustrant l'évacuation du bac,

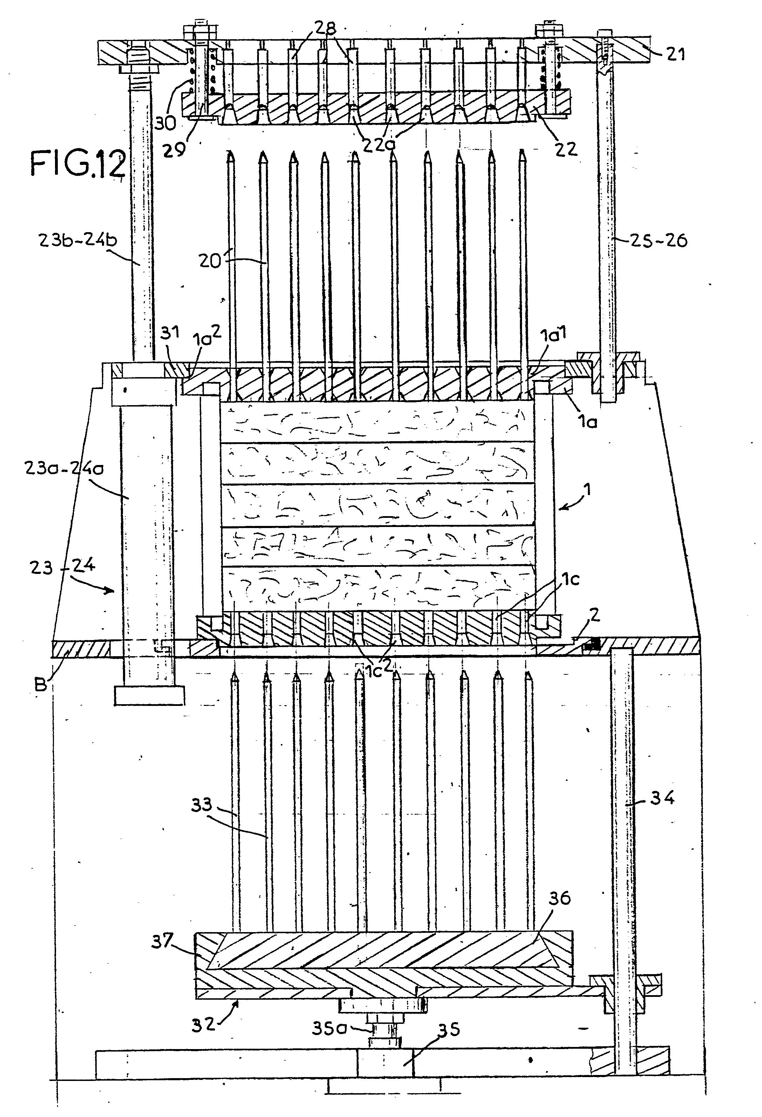

-la figure 12 est une vue en coupe de la machine,

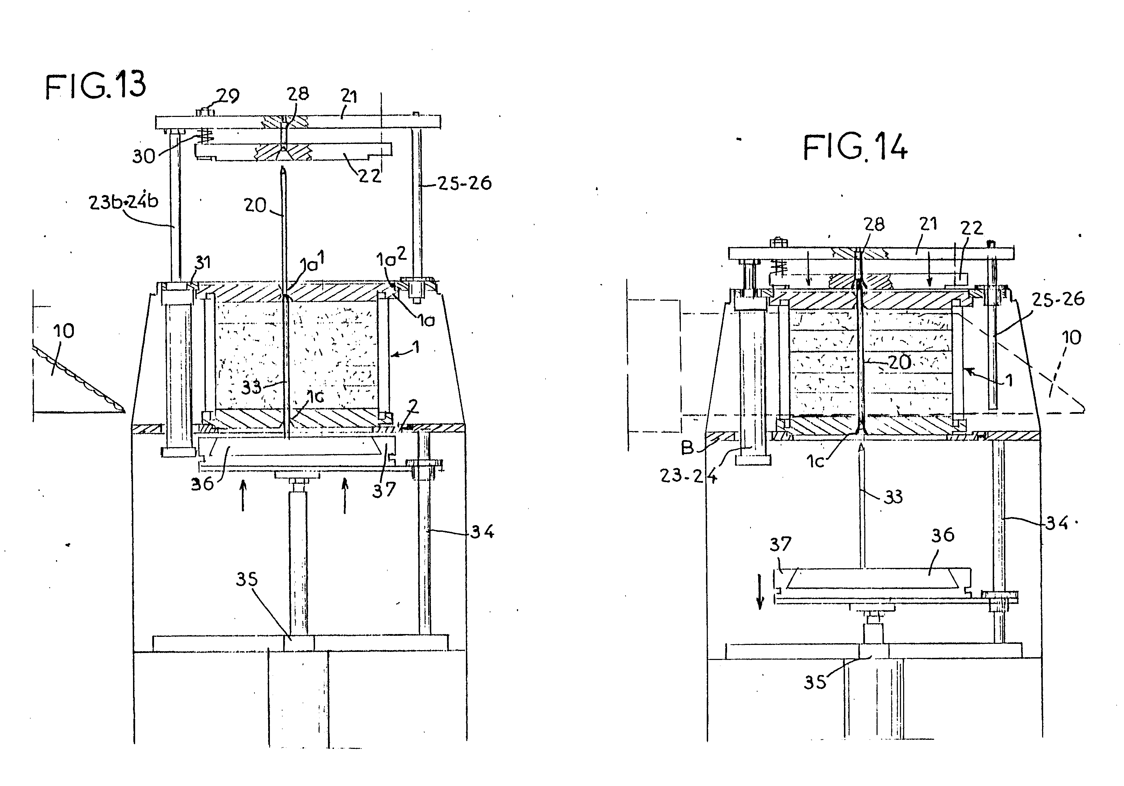

-les figures 13, 14, 15 illustrent les principales phases de fonctionnement pour l'embrochement. Pour une meilleure clareté des dessins, une seule broche et une seule tige de préperçage sont illustrées,

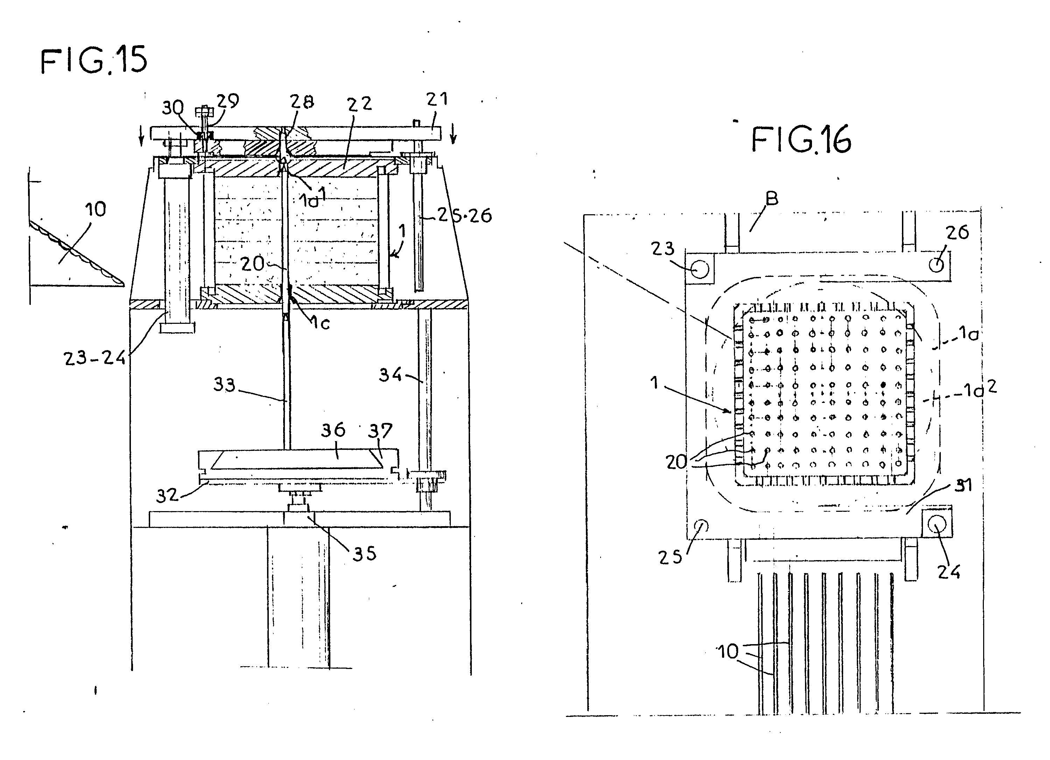

-la figure 16 est une vue en coupe considérée selon ligne 16.16. de la figure 15.

Afin de rendre plus concret l'objet de l'invention, on le décrit maintenant d'une manière non limitative aux figures des dessins.

D'une manière connue, la machine comprend en combinaison, convenablement monté à l'intérieur d'un bâti (B), un dispositif d'embrochement automatique et un dispositif automatique de coupe. Les différentes couches de viande et/ou de légumes sont disposées en superposition à l'intérieur d'un panier ou bac (1) conformé pour le passage des organes de coupe, comme il est indiqué dans la suite de la description. Ce panier - (1) est monté d'une manière démontable dans un plateau support (2) que présente une partie du bâti (B).

La partie supérieure du panier (1) reçoit un guide (1a) qui est agencé dans son épaisseur pour autoriser le positionnement vertical et ordonné d'une pluralité de broches (3) métalliques, en appui sur la ou les couches de viande et/ou de légumes disposées à l'intérieur dudit panier (1). Par exemple, le guide (1a) se présente sous la forme d'une semelle d'épaisseur convenable, percée de part en part d'une pluralité de trous verticaux (1a1). Ce guide (1a) est amovible et fait office de couvercle en étant centré sur les parois verticales (1b) du panier.

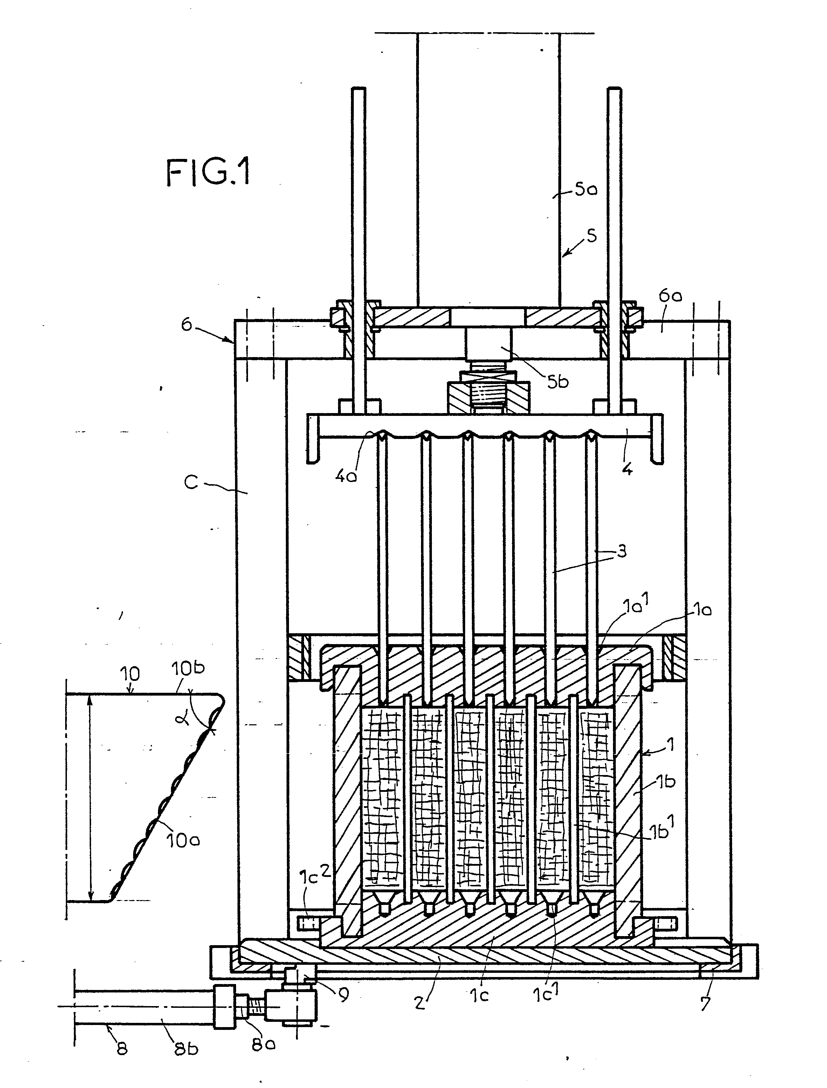

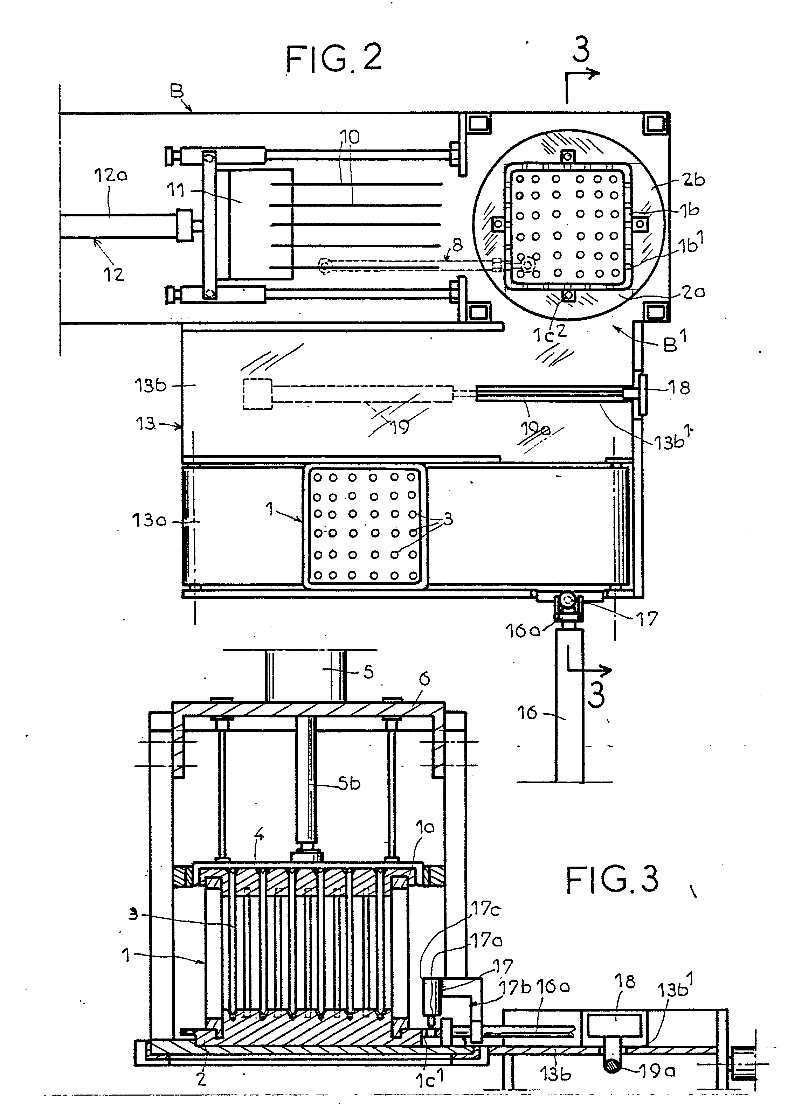

Au dessus du panier (1) et d'une manière axiale à ce dernier, est positionné le dispositif d'embrochement. Dans la forme de réalisation illustrée aux figures 1 à 12, le dispositif est constitué essentiellement d'une plaque d'appui (4) asservie à un organe de commande (5) pour être déplacée verticalement en hauteur d'une manière parallèle au couvercle de guidage (1a) recevant les broches (3).

Dans l'exemple illustré, l'organe de commande (5) est un vérin dont le fût (5a) est solidaire de la partie supérieure (6a) d'un étrier support (6) monté à l'intérieur du bâti de part et d'autre et concentriquement au panier (1). La plaque d'appui (4) sodidaire de la tige (5b) du vérin peut être équipée de colonnes de guidage (c) montées à libre coulissement dans des parties appropriées dans la face supérieure (6c) de l'étrier (6).

Il est bien évident qu'en position rentrée de la tige (5b) du vérin (5), la plaque d'appui (4) est escamotée en hauteur, au dessus des broches (3) positionnées dans les trous (1a1) du couvercle de guidage (1a) (figure 1). On conçoit donc, qu'en agissant sur le vérin (5), la plaque (4) , sous l'effet du déploiement linéaire de la tige (5b), prend appui sur l'extrémité libre de l'ensemble des brochettes - (3) et les enfonce pro gressivement dans les différentes couches de viande et/ou de légumes, jusqu'en position de butée sur la face supérieure du couvercle de guidage correspondant à l'enfoncement complet desdites broches (3). La base - (1c) du panier présente une pluralité de trous borgnes (1c1), en correspondance avec les trous - (1a1), pour le positionnement des extrémités des broches.

La plaque (4) demeure en pression et en appui sur le couvercle (1a) maintenant ainsi fortement les couches de viandes et/ou de légumes, ce qui s'avère important pendant l'opération de coupe. Dans ce but, d'une manière préférée mais non rigoureusement limitative, la plaque d'appui (4) est conformée en section pour se centrer sur la section externe du couvercle. De même, d'une manière préférée, la face de dessous de la plaque (4) présente une pluralité d'empreinte en creux (4a) en nombre correspondant à celui des broches (3). Ces empreintes sont conformées pour coopérer avec la tête des broches en vue d'améliorer leur positionnement au fur et à mesure de leur embrochement, sous l'effet de l'appui exercé par la plaque (4).

Le plateau (2) recevant le panier (1) est monté tournant dans une bague de friction (7) solidaire du bâti, en étant indexé angulairement en rotation suivant un déplacement circulaire de 90°. Par exemple, le plateau (2) est asservi à un vérin (8) dont la tige (8a) est agencée pour être accouplée par l'intermédiaire d'un axe tourillon (9) à une partie dudit plateau (2), le fût (8b) de ce vérin étant fixé à libre articulation sur une partie du bâti (figure 1).

En fonction de la commande ou pas du vérin - (8), le plateau (2) et conséquemment le panier (1), sont susceptibles d'occuper deux positions angulaires décalées de 90°. On souligne que le panier (1) est centré sur le plateau (2), tout en étant facilement démontable. Par exemple, l'embase (1c) du panier est susceptible d'être engagée à coulissement guidé dans l'une quelconque de deux rainures (2a) et (2b) disposées à 90°, et conformées pour faire office de butée en translation dudit panier (1) afin de le positionner axialement au dispositif d'embrochement.

Dans la forme de réalisation des figures 12 à 15, le dispositif d'embrochement comprend essentiellement un ensemble de deux plaques d'appui superposées (21 et 22) accouplé à des organes de commande pour être déplacé verticalement en hauteur, d'une manière parallèle au couvercle. Comme indiqué, le couvercle (1a) qui est agencé dans son épaisseur pour autoriser le positionnement vertical et ordonné d'une pluralité de broches (20). Les trous verticaux (1a1) recevant les broches (20), sont chanfreinés à chacune de leurs extrémités. Le couvercle (1a) est centré à l'intérieur du bac (1), en appui sur les parois. Les organes de commande sont composés de deux vérins verticaux (23) et (24) dont les fûts (23a) et (24a) sont solidaires d'une partie du bâti (B) de la machine, tandis que les tiges (23b) et (24b) sont accouplées à la plaque (21).

La plaque (21) est en outre solidaire de deux colonnes de guidage (25) et (26) montées à libre coulissement dans des bagues (27) que présente la partie supérieure du bâti. Les vé rins (23) et - (24) ainsi que les colonnes (25) et (26) sont respectivement disposés selon les diagonales de la plaque (21).

La plaque supérieure (21) présente en débordement de sa face de dessous, une pluralité de doigts de poussée (28) en nombre et en correspondance avec les trous (1a1) du couvercle (1a) recevant les broches (20). Ces doigts (28) coopèrant à libre coulissement avec des trous verticaux (22a) établis dans l'épaisseur de la plaque inférieure (22). L'extrémité débouchante des trous (22a) est largement chanfreinée pour le positionnement des broches.

La plaque (22) est maintenue parallèlement et d'une manière espacée à la plaque supérieure - (21), au moyen de tiges d'accouplement (29) en étant assujettie à un organe élastique de rappel - (30). Les tiges d'accouplement (29) sont engagées librement dans l'épaisseur de la plaque (21) de sorte que les deux plaques peuvent être soumises à un mouvement relatif de rapprochement à l'encontre de l'organe élastique (30).

La longueur des doigts (28) est déterminée pour qu'en position jointive des deux plaques (21) et (22), ces derniers débordent d'une certaine longueur de la plaque inférieure (22).

On rappelle que les plateau (2) recevant le bac (1) est monté tournant dans une partie appropriée du bâti en étant indexé angulairement en rotation suivant un déplacement circulaire de 90°. La partie supérieure du bac (1), en l'occurence le couvercle (1a), coopère avec une semelle d'appui et de centrage fixe (31) solidaire du bâti (B).

Cette semelle (31) présente, dans sa partie médiane, une échancrure (31a) profilée en fer à cheval, dans laquelle est positionnée et centrée une empreinte circulaire en relief (1a2) formée en débordement du couvercle (1a). Après positionnement du bac (1) dans le plateau tournant (2), la semelle (31) vient en appui sur le couvercle, ledit bac pouvant tourner par rapport à ladite semelle.

Suivant une autre caractéristique, sous le plateau (2), et d'une manière coaxiale au bac (1), est montée à libre coulissement, une plaque support - (32) qui reçoit une pluralité de tiges de préperçage (33). Les tiges (33) sont disposées en regard et en correspondance avec des trous débouchants (1c2) formés dans l'épaisseur du fond (1c) du bac (1). Bien évidemment, les trous (1c2) sont eux-mêmes disposés selon les mêmes coordonnées que les trous (1a2) du couvercle (1a) recevant les broches.

De même, le plateau (2) recevant le bac (1) présente une ouverture coaxiale (2a) pour mettre en communication le fond dudit bac et l'ensemble préperceur.

La plaque support (32) est montée à libre coulissement le long de colonnes de guidage (34) solidaires du bâti (B). Cette plaque est assujettie à un vérin (35) pour être déplacée verticalement en hauteur, dans les deux sens, en direction du bac - (1) positionné dans le plateau (2) et la semelle de centrage (31). Le vérin (35) est accouplé coaxialement par sa tige (35a) à la plaque support (32).

Dans la forme de réalisation illustrée, les tiges de préperçage (33) sont fixées dans un tiroir amovible (36) profilé en queue d'aronde et engagé à libre coulissement dans une semelle tournante - (37) montée sur la plaque support (32). La semelle (37) est indexée en rotation en correspondance avec le plateau tournant (2) recevant le bac (1).

D'une manière importante, le vérin (35) et les vérins (23) et (24) sont assujettis à un asservissement de commande conformé pour permettre le retrait des tiges (23a) et (24a) et conséquemment l'abaissement de l'ensemble des plaques (21) et (22), au fur et à mesure du rappel en position initiale rentrée de la tige (35a) du vérin (35).

Il apparaît donc au fur et à mesure du retrait des tige de préperçage (33) des couches de viande, l'enfoncement concomitant des broches (20).

Le dispositif de coupe est avantageusement du type de celui décrit dans la Demande de Brevet français 82.21153 et comprend un ensemble de couteaux (10) dont le nombre correspond à celui des fentes (1b1) que présentent verticalement chacune des faces latérales du panier (1).

La partie arrière des couteaux (10) est solidaire d'un bloc d'accouplement (11) qui est relié à la tige (12a) d'un vérin à double effet (12) en vue d'appliquer à l'ensemble du bloc porte-couteaux, un mouvement de translation horizontale aller et retour. La partie tranchante (10a) de la lame des couteaux - (12) est biseautée, et la hauteur (h) de cette lame correspondant au moins à la distance entre les guides supérieur (1a) et inférieur (1b) du bac d'embrochement (1). La longueur des lames est fonction des dimensions du bac (1). Le tranchant (10a) de chacune des lames est biseauté de façon que le côté horizontal (10b) de plus grande longueur est situé en partie haute ou basse.

On conçoit donc que lorsque le vérin (12) est actionné, l'ensemble des lames (10) pénètre progressivement dans les différentes couches de viandes et/ou de légumes en vue de les trancher en une seule opération.

Compte tenu de la simplification du dispositif d'embrochement quelle que soit sa forme de réalisation, il est possible d'automatiser la mise en place et le retrait des paniers de la machine ainsi que leur évacuation. Dans ce but, au niveau du plateau support (2) recevant le panier (1), le bâti de la machine est prolongé latéralement par un plan de travail horizontal (13) présentant deux couloirs longitudinaux parallèles (13a) et (13b) agencés respectivement, l'un pour l'alimentation de paniers, l'autre pour leur évacuation.

Le couloir (13a) est par exemple assujetti à un tapis roulant et présente deux rails parallèles (14) et (15) pour le guidage du panier. Axialement à une ouverture (B1) du bâti (B) pour l'introduction du panier (1) sur le plateau support (2), le plan de travail (13) est équipé d'un vérin (16) dont la tige (16a) est agencée pour pousser ledit panier en direction de ladite ouverture (B1) pour son positionnement sur le plateau (2). Le vérin (16) est à double effet pour autoriser également le retrait du panier en dehors du plateau (2) en combinaison avec un autre vérin (17).

Le fût (17c) de ce vérin (17) est disposé verticalement dans un plan perpendiculaire au plan du vérin (16) en étant solidaire au moyen d'une chape (17b) par exemple, de la tige (16a) dudit vérin (16). Ce vérin (17) est destiné à coopérer au moyen de sa tige (17a) avec une partie appropriée de la base (1c) du panier en vue de son accouplement temporaire. A cet effet, la base (1c) du panier peut présenter en débordement de la partie médiane de chacune de ses faces, des semelles (1c3), percées de part en part pour l'introduction de la tige (17a) du vérin (17). On conçoit donc lorsque le vérin (16) est actionné pour rentrer sa tige (16a), que le vérin (17) est déplacé d'une manière concomitante et entraîne de ce fait, au moyen de sa tige (17a) engagée dans le trou de l'une des semelles (1c), le panier (1) en dehors du bâti (B) pour le positionner en alignement axial avec le couloir d'évacuation (13b).

Le couloir (13b) présente en bout une fente axiale (13b1) disposée au droit de l'ouverture (B1) du bâti. Cette fente permet le débordement d'une plaque d'appui latérale (18) dont la base (18a) est accouplée à la tige (19a) d'un vérin (19) fixé sous le couloir (13b). Cette plaque (18) est conformée pour coopérer en appui avec le bord de la semelle (1c) du panier en vue de son évacuation sous l'effet de déplacement de la tige (19c).

Il convient d'analyser maintenant le fonctionnement de la machine, étant bien évident que l'ensemble des vérins est assujetti à tout moyen de commande approprié en étant asservi à différents détecteurs de position, pour réaliser le cycle d'embrochement et de découpage.

Pour une meilleure compréhension, on distingue volontairement, d'une part le fonctionnement relatif au dispositif d'embrochement des figures 1 à 11 et, d'autre part, le fonctionnement du dispositif d'embrochement des figures 12 à 16.

Fonctionnement selon les figures 1 à 11 :

Un panier, garni de différentes couches de viande et/ou de légumes, est disposé manuellement dans le couloir (13a), les broches métalliques (3) étant positionnées verticalement dans les trous (1a1) du couvercle de guidage (1a), et en appui sur lesdites couches. Le tapis roulant amène le panier en bout du couloir (13a), en regard du vérin (16).

Le vérin (16) est actionné, sa tige (16a) pousse le panier en direction de l'ouverture (B1) du bâti (B), en vue de son positionnement dans l'une des rainures du plateau support (2) (figures 4 et 5). la tige du vérin (16) peut à ce moment être partiellement retirée.

Le vérin (5) est actionné pour abaisser la plaque d'appui (4) en vue de l'enfoncement simultané de l'ensemble des broches (3) dans les différentes couches de viande et/ou de légumes. La plaque (14) demeure en pression sur le couvercle (1a) du panier (figure 6).

Le dispositif de coupe est ensuite sollicité. Le vérin (12) déplace en translation les couteaux (10) qui effectuent un premier tranchage de l'ensemble des couches de viande et/ou de légumes (figure 7). Les couteaux sont ensuite dégagés du panier pour permettre sa rotation de 90° au moyen du vérin (8) ; le vérin d'appui (5) est partiellement dégagé. Il est alors possible d'effectuer la deuxième coupe au moyen des couteaux (10) commandés de nouveau en translation par le vérin (12), le vérin (5) ayant préalablement repositionné en appui sur le panier la plaque (4). Cette coupe s'effectue donc à 90° par rapport à la première (figure 8).

La plaque d'appui étant escamotée en hauteur par le vérin (5), il convient de retirer le panier de la machine, les différentes couches de viande et/ou de légumes étant convenablement embrochées et découpées. A cet effet, le vérin (16) est actionné pour amener le vérin (17) au droit des semelles débordantes (1c) de la base du panier, afin que la tige (17a) dudit vérin (17) puisse être engagée dans les trous correspondant de la semelle (1c1) (figure 9).

La tige du vérin (16) est alors sollicitée en sens inverse pour déplacer en translation le panier (1) en vue de son extraction, jusqu'à ce qu'il soit positionné dans l'axe médian du couloir d'évacuation (13b) (figure 10).

La tige (17a) du vérin est escamotée en hauteur pour désaccoupler le panier, la tige (16a) du vérin (16) étant ramenée en position repos.

Le panier (1) étant positionné dans l'axe du couloir (13b), le vérin (19) est actionné pour déplacer la plaque d'appui latérale (18) qui coopère avec la base du panier en vue de son déplacement concomitant pour son évacuation. Le vérin (19) est ensuite ramené en position, un autre cycle peut alors commencer.

On prévoit, dans une réalisation en variante de rendre tournant le couvercle de guidage (1a). De même, compte tenu de l'emploi de broches métalliques (3) notamment du type de celles décrites dans la Demande de Brevet 85.14893, avec un profil en section particulier, il est possible, avec un encombrement du panier identique, d'augmenter le nombre de broches qui, en compression, occupent un volume inférieur à celui d'une broche de section ronde et pleine.

Fonctionnement selon les figures 12 à 16 :

Après avoir garni préalablement le bac (1) des différentes couches de viande et/ou de légumes, on introduit manuellement ou automatiquement les broches (20) dans les trous verticaux de guidage et de positionnement (1a1) du couvercle (1). A noter que les broches (20) sont en contact avec la couche de viande extrême par leur extrémité plate opposée au bout pointu lorsqu'il existe.

Le bac est ensuite introduit dans les moyens de centrage et de positionnement du bâti à savoir le plateau tournant (2) et la semelle d'appui (31). Le couvercle (1a) du bac (1) recevant les broches est donc fermement maintenu en appui sur le bac au moyen de la semelle.

L'introduction du bac (1) dans la machine peut s'effectuer manuellement ou bien, comme indiqué précédemment, automatiquement.

A ce stade, les tiges (23b) et (24b) des vérins (23) et (24) sont déployées pour maintenir en position haute l'ensemble des plaques d'appui (21)-(22), au-dessus des broches positionnées dans le couvercle (1a) du bac (1) (figure 12).

Inversement, la tige (35a) du vérin (35) est rentrée pour maintenir en position basse les tiges de préperçage (33) sous le fond (1c) du bac. Les broches (20) et les tiges de préperçage (33) sont disposées coaxialement et en alignement avec les trous (1a1) et (1c2) respectivement du couvercle (1a) et du fond (1c) du bac (1).

Le vérin (35) est alors actionné, ce qui a pour effet de déplacer en hauteur l'ensemble de la plaque support (32) en direction du bac, provoquant l'enfoncement progressif des différentes tiges de préperçage (33) dans les couches de viande et/ou de légumes. Les tiges (33) sont engagées au travers des trous (1c2) du fond du bac et sont arrêtées en position d'engagement partiel dans l'extrémité débouchante inférieure des trous (1a1) du couvercle pour être en contact avec les broches correspondantes (20) (figure 13).

Le dispositif de coupe est alors sollicité. Les couteaux (10) sont déplacés en translation pour effectuer un premier tranchage de l'ensemble des couches de viande et/ou de légumes, entre les tiges de préperçage (33). Les couteaux sont ensuite dégagés du bac (1) pour permettre sa rotation à 90° sous l'effet du déplacement circulaire du plateau (2). D'une manière concomitante, la semelle (37) recevant les tiges de préperçage est entraînée circulairement compte tenu de son montage à libre rotation.

Les couteaux (10) sont de nouveau commandés en translation pour effectuer la deuxième coupe, à 90° par rapport à la première. On rappelle que d'une manière préférée, le tranchant (10a) de chacune des lames est biseauté de sorte que le côté de plus grande longueur est disposé en partie basse.

Avant ou après retrait des couteaux (10), le vérin (35) est commandé en sens inverse au précédent pour permettre l'abaissement de la plaque support (32) en vue du retrait des tiges de préperçage (33). Simultanément à la commande du vérin (35), les vérins (23) et (24) sont mis en échappement libre pour autoriser par gravité l'abaissement de l'ensemble des plaques d'appui (21)-(22) qui appuient par leur doigts de poussée (28) sur les broches (20) pour autoriser au fur et à mesure du retrait des tiges de préperçage (33), l'enfoncement desdites broches (20). On conçoit donc que les broches (20) sont en contact permanent avec les tiges de préperçage (33) et peuvent de ce fait facilement s'enfoncer dans les couches de viande et/ou de légumes en profitant temporairement des trous de passage fait par lesdites tiges (figure 14).

Lorsque la plaque inférieure (22) arrive en contact avec le couvercle (1a), l'ensemble de préperçage étant escamoté, la plaque supérieure (21) est rabaissée par les tiges (23a) et (24a) des vérins (23) et (24) ce qui a pour effet de provoquer le débordement des doigts de poussée (28) de la plaque inférieure (22) qui, par conséquent, finissent d'enfoncer les broches (figure 15).

Les tiges des vérins (23) et (24) sont alors redéployées pour ramener en position haute les plaques (21) et (22) qui se retrouvent automatiquement écartées sous l'effet de détente des ressorts de rappel (30).

Il suffit de retirer, manuellement ou automatique ment, le bac (1) avec les différentes couches de viande et/ou de légumes convenablement découpées et embrochées.

A noter que, pour l'abaissement des plaques d'appui (21) (22), les vérins de commande (23) et (24) peuvent être mis soit en échappement libre comme indiqué, soit commandés positivement pour autoriser la rentrée de leurs tiges respectives (23a) et (24a).

Le dispositif d'embrochement décrit et illustré aux figures 1 à 11 s'applique plus particulièrement pour des broches métalliques ou autre matériau dont la nature et/ou la section, leur confère une grande rigidité. Par contre, le dispositif d'embrochement des figures 12 à 16 s'applique pour les différentes broches en bois couramment utilisées et relativement fragiles.

**Revendications**

-1-Machine pour la fabrication automatique de brochettes de viande et/ou de légumes enfilées sur des broches, ladite machine qui comprend un bac de découpage et d'embrochement recevant les différentes couches de viande et/ou de légumes ; un ou des dispositifs de coupe accouplés à un moyen de commande en translation horizontale aller et retour en étant monté à coulissement guidé et perpendiculairement à l'une au moins des faces du bac en vue d'effectuer le tranchage desdites couches, est caractérisée en ce que le dispositif d'embrochement est disposé axialement au-dessus du bac (1) en étant conformé et commandé verticalement en hauteur pour autoriser l'embrochement automatique et simultané de l'ensemble des broches qui sont positionnées verticalement dans des agencements que présente la face supérieure (1a) du bac (1) de sorte que lesdites broches sont en appui sur les couches de viande et/ou de légumes.

-2-Machine selon la revendication 1, caractérisée en ce que, sous la base du bac (1) est montée coaxialement à libre coulissement, une plaque support (22) qui reçoit directement ou d'une manière rapportée, une pluralité de tiges de préperçage (33) disposées en regard et en correspondance avec des trous débouchants (1c2) formés dans le fond dudit bac, en alignement et en correspondance avec les agencements (1a1) du couvercle (1a) recevant les broches, le dispositif d'embrochement et ladite plaque support des tiges de préperçage étant asservis à des moyens de commande conformés et agencés pour, dans un premier temps, autoriser l'enfoncement des tiges de préperçage (33) dans les différentes couches de viande, puis, dans une étape ultérieure, autoriser le retrait desdites tiges (33) et simultanément l'enfoncement des broches (20) au fur et à mesure du retrait des tiges de préperçage (33).

-3-Machine selon la revendication 2, caractérisée en ce que la base du bac (1) est engagée à libre coulissement dans un plateau tournant (2) en position d'indexation et de butée, ledit plateau étant assujetti à un moyen de commande pour occuper deux positions angulaires décalées de 90°, la partie supérieure du bac, notamment le couvercle (1a) coopérant à libre rotation avec une semelle d'appui et de centrage fixe (31) solidaire du bâti (B), ledit plateau (2) présentant une ouverture coaxiale (2a) pour mettre en communication le fond dudit bac et l'ensemble de préperçage.

-4-Machine selon les revendications 2 et 3 ensemble, caractérisée en ce que la plaque support (32) est montée à libre coulissement le long de colonnes de guidage (34) solidaires du bâti (B), ladite plaque étant assujettie à un vérin (35) pour être déplacée verticalement en hauteur dans les deux sens, en direction du bac (1) positionné dans le plateau (2) et la semelle d'appui (31).

-5-Machine selon la revendication 4, caractérisée en ce que les tige de préperçage (33) sont fixées dans un tiroir amovible (35) engagé à libre coulissement dans une semelle tournante (37) montée sur la plaque support (32), ladite semelle étant indexée en rotation en correspondance avec le plateau tournant (2).

-6-Machine selon la revendication 1, caractérisée en ce que le dispositif d'embrochement comprend un ensemble composé de deux plaques parallèles superposées (21) et (22) accouplées aux organes de commande sous forme de deux vérins verticaux (23) et (24) dont les fûts (23a) et (24a) sont solidaires d'une partie du bâti tandis que leurs tiges sont reliées à la plaque (21).

-7-Machine selon la revendication 6, caractérisée en ce que la plaque supérieure (21) présente en débordement de sa face de dessous, une pluralité de doigts de poussée (28) en nombre et en correspondance avec les trous (1a1) du couvercle (1a), lesdits doigts coopérant à libre coulissement avec des trous verticaux (22a) établis dans l'épaisseur de la plaque inférieure (22) qui est maintenue parallèlement à la plaque supérieure (21) au moyen de tiges d'accouplement (29) en étant assujettie à un organe élastique de rappel (30).

-8-Machine selon la revendication 7, caractérisée en ce que les tiges d'accouplement (29) sont engagées librement dans l'épaisseur de la plaque (21) de sorte que les deux plaques (21) et (22) peuvent être soumises à un mouvement relatif de rapprochement à l'encontre de l'organe élastique (30), la longueur des doigts (28) étant déterminée pour qu'en position jointive desdites plaques (21) et (22), ces derniers débordent d'une certaine longueur de la plaque inférieure (22).

-9-Machine selon les revendications 4 et 6 ensemble, caractérisée en ce qu'en position initiale de repos, les tiges (23b) et (24b) des vérins (23) et (24) sont déployées pour maintenir en position haute l'ensemble des plaques d'appui (21) et (22) au-dessus des broches (20) positionnées dans le couvercle (1a), tandis que la tige (35a) du vérin - (35) est rentrée pour maintenir en position basse les tiges de préperçage (33) sous le fond du bac ; les broches (20) et les tiges (33) étant disposées coaxialement et en alignement avec les trous (1a1) et (1c2) respectivement du couvercle (1a) et du fond (1c) dudit bac.

-10-Machine selon la revendication 9, caractérisée en ce que le vérin (35) et les vérins (23) et (24) sont assujettis à un asservissement de commande conformé pour permettre le retrait des tiges (23a) et (24a) et conséquemment l'abaissement de l'ensemble des plaques (21) et (22), au fur et à mesure du rappel en position initiale rentrée de la tige (35a) du vérin (35).

-11-Machine selon la revendication 1, caractérisée en ce que le dispositif d'embrochement est constitué d'une plaque d'appui (4) asservie à un organe de commande (5) pour être déplacée verticalement en hauteur d'une manière parallèle à la face supérieure de guidage et de positionnement (1a) du bac recevant les broches, ladite plaque (4) étant conformée en section pour être centrée sur la section externe de ladite face (1a), et présentant une pluralité d'empreintes en creux (4a) conformées et ordonnées pour coopérer avec la tête des broches (3).

-12-Machine selon la revendication 1, caractérisé en ce que le bâti de la machine est prolongé latéralement au niveau de l'introduction - (B1) du bac (1), par un plan horizontal (13) conformé et agencé, en combinaison avec des moyens de commande, pour assurer automatiquement :

-le positionnement des bacs garnis de broches à l'intérieur de la machine en alignement avec le dispositif d'embrochement ;

-le retrait des bacs après embrochement et tranchage des différentes couches de viande et/ou de légumes ;

-l'évacuation des bacs.

-13-Machine selon la revendication 12 caractérisée en ce que le plan de travail (13) présente deux couloirs longitudinaux parallèles - (13a et (13b) agencés respectivement l'un pour l'alimentation des bacs, l'autre pour leur évacuation, ledit plan de travail (13) étant équipé axialement à l'ouverture (B1) du bâti, d'un vérin - (16) dont la tige (16a) est agencée pour pousser ledit bac en direction de ladite ouverture pour son positionnement dans le plateau support (2), le vérin (16) étant conformé pour autoriser le retrait du bac en combinaison avec un autre vérin.

-14-Machine selon la revendication 13, caractérisée en ce que le vérin (17) est solidaire verticalement de la tige (16a) de sorte que sa tige - (17a) coopère avec une partie appropriée de la base (1c) du bac (1) en vue de son accouplement temporaire pour autoriser l'extraction du bac en dehors du bâti et le positionner axialement au couloir d'évacuation (13b).

-15-Machine selon la revendication 14, caractérisée en ce que le couloir (13b) présente au droit de l'ouverture (B1) du bâti, une fente axiale - (13b1) qui permet le débordement d'une plaque d'appui latérale (18) dont la base est accouplée à la tige (19a) d'un vérin (19) fixé sous le couloir (13b), ladite plaque étant conformée pour coopérer en appui avec le bord de la base (1c) du bac.

-16-Machine selon la revendication 13, caractérisée en ce que le couloir (13a) est assujetti à un tapis roulant et présente deux rails parallèles de guidage (14) et (15).

-17-Machine selon la revendication 12, caractérisée par le cycle de fonctionnement suivant :

-mise en place dans le couloir (13a) d'un bac (1) garni des différentes couches de viande et/ou de légumes, les broches étant positionnées verticalement dans la face supérieure (1a) du bac, en appui sur la couche supérieure ;

-introduction du bac (1) dans le plateau support (2) par le vérin (16) ;

-embrochement des différentes couches de viande,

-tranchage des différentes couches de viande dans deux plans décalés de 90° ;

-retrait du bac (1) par le vérin (16) et la tige (17a) du vérin (17) en coopérant avec l'agencement de la base du bac qui est positionné dans l'axe médian du couloir (13b)

-évacuation du bac (1) au moyen de la plaque latérale d'appui (18) commandé par le vérin (13).

-18-Machine selon l'une quelconque des revendications 1, 2 et 12, caractérisée par le cycle de fonctionnement suivant :

. introduction manuelle ou automatique du bac (1) préalablement garni des couches de viandes et/ou de légumes, dans la machine pour son positionnement dans le plateau tournant (2) et la semelle d'appui et de centrage (31), les broches (20) étant positionnées verticalement dans les agencements du couver cle (1a), en appui sur la couche supérieure de viande et/ou de légumes;

commande du vérin (35) pour l'introduction des dif férentes tiges de préperçage dans les couches de viande, jus qu'en position de contact avec les broches;

commande du dispositif de coupe pour effectuer un premier tranchage entre les tiges de préperçage (33);

retrait du dispositif de coupe et indexation à 90° du bac (1) et concomitamment de la semelle recevant les tiges de préperçage;

commande du dispositif de coupe pour effectuer le deuxième tranchage à 90° du premier;

commande simultanée des vérins (35) et (23) -- (24) pour assurer l'enfoncement des broches (20) par les plaques (21) -(22) au fur et à mesure du retrait des tiges de préperçage (33) et, en position de butée de la plaque inférieure (22) sur le couvercle (1a) abaissement de la plaque supérieure - (21) pour provoquer le débordement des doigts de poussée dans les trous (1a1) du couvercle pour compléter l'enfoncement desdites broches;

retrait automatique ou manuel du bac.

FIG.1

# FIG.2

# FIG.3

FIG.4

FIG.5

FIG.6

FIG.7

FIG.8

FIG.9

FIG.10

FIG.11

FIG.12

23b~24b

20

23a~24a

23~24

B

31

1a²

1a¹

1a

1

1c

1c²

28

30

29

22a

22

25~26

2

33

34

36

37

32

35a

35

FIG.14

FIG.13

# FIG.15

# FIG.16

0 230 841

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 535 169 (TOLERIE SUISSE) * Page 3, ligne 33 - page 4, ligne 28; revendication 1 * | 1 | A 22 C 17/00 |
| A | | 6,11 | |
| P,X | FR-A-2 572 894 (GOYHEIX) * En entier * | 1,6-8 | |
| A | | 2,7,11 | |
| P,X | FR-A-2 574 252 (SOCOPRAL) * Page 4, lignes 11-19; page 5, ligne 3 - page 6, ligne 34 * | 1 | |
| A | | 2,11 | DOMAINES TECHNIQUES RECHERCHES (Int. Cl.4) |
| A | EP-A-0 113 637 (A. EMSENS) * Page 4, ligne 2 - page 9, ligne 14 * & FR-A-8 221 153 (Cat. D) * * | 1,3-5, 11 | A 22 C |
| A | EP-A-0 098 451 (CHAMPAGNE VIANDE) * En entier * | 1,2,9, 10 | |
| A | EP-A-0 078 232 (DOLLE) | | |

--- -/-

Le présent rapport de recherche a été établi pour toutes les revendications

| Lieu de la recherche | Date d'achèvement de la recherche | Examinateur |
|---|---|---|
| LA HAYE | 23-03-1987 | DE LAMEILLIEURE D. |

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 494 092 (DOLLE) | | |
| | ----- | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 23-03-1987 | DE LAMEILLIEURE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82